# EUROPEAN PATENT APPLICATION

(11) **EP 4 207 833 A1**
(43) Date of publication of application: **05.07.2023**
(21) Application number: 21218185.3
(22) Date of filing: 29.12.2021
(51) Int. Cl.: H04W 4/70, H04W 52/02

(54) **TRACKING DEVICE AND RECOVERY DEVICE, METHOD FOR ESTABLISHING A WIRELESS COMMUNICATION LINK**

(71) Applicant: Viloc nv, 2600 Berchem (BE)
(72) Inventor: ARITS, Maarten, 2500 Lier (BE)
(74) Representative: IPLodge bv

(57) **Abstract**

The present disclosure relates to a tracking device, a recovery device and a method for establishing a point-to-point wireless communication link between the tracking device and the recovery device. The method performed by the tracking device comprises performing a wake-up procedure followed by a tracking procedure. The wake-up procedure comprises at least: obtaining a wake-up plan, detecting a presence of channel activities in accordance with the wake-up plan, and if a presence of channel activities is detected according to the wake-up plan, then the tracking device transmits a wake-up response message to the recovery device, wherein the wake-up response message comprises at least a tracking device ID. The wake-up plan is used by the recovery device for transmitting wake-up command messages to the tracking device, and the wake-up plan comprises at least a plurality of subsequent transmit time slots and a first sequence of channel frequencies defining for each of the subsequent transmit time slots a corresponding channel frequency. The tracking procedure performed by the tracking device comprises transmitting tracking messages to the recovery device according to a pre-agreed tracking plan.

## Description

### Field of the disclosure

The present disclosure relates to a tracking device and a recovery device for recovering the tracking device when the tracking device is missing and/or when a communication with an application server is lost. More particularly, the present disclosure relates to a method to recover a tracking device by establishing a wireless communication link between the tracking device and the recovery device.

### Background

A tracking device is also known as an RF tag and is used for tracking objects. The tracking device is generally attached or inserted to the object that needs to be tracked.

A tracking device typically comprises a radio module configured for transmitting at regular time intervals an RF signal or beacon receivable by an application server or host server.

The tracking device communicates for example over an loT-network with the application server.

The tracking device comprises an internal battery to power the tracking device. The tracking devices are generally designed to limit power consumption in order to have a battery life time of at least a couple of years.

An example and growing market of an application making use of tracking devices is the management of vehicles of a micro-mobility provider, e.g. a provider of dock-less electrical vehicles. For each vehicle, e.g. a bike, a tracking device is covertly integrated. When a vehicle is missing, an application on the application server can determine a rough position of the missing vehicle based on for example the known locations of the gateways of the network and/or based on received signal strengths.

A disadvantage with these systems is however that the position that can be determined based on the network is not a precise position. Also, when a vehicle is stolen it can be located in a basement or underground parking where network coverage is poor.

Some tracking systems make use of GPS technology where each vehicle to be tracked is provided with a central processing unit featuring a GPS. However, when for example an electrical bike is stolen, often the power cord of the CPU is cut or the bike is moved inside where the GPS is not functioning.

In other words, recovering a missing tracking device, especially in a city environment, can be cumbersome and can take a huge amount of time.

Hence there is room for improving tracking devices and for providing dedicated recovery devices for recovering missing tracking devices.

### Summary

It is an object of the present disclosure to provide a tracking device and a dedicated recovery device for recovering the tracking device when the tracking device is missing, whether the tracking device is located outdoor or indoor/underground. More specifically it is an object to provide a method to establish a point-to-point communication link between the tracking device and the recovery device, and wherein life time reduction of the battery of the tracking device resulting from performing a recovery procedure is limited.

The present invention is defined in the appended independent claims. The dependent claims define advantageous embodiments.

According to the present disclosure, a method is provided for establishing a point-to-point wireless communication link between a tracking device and a recovery device, wherein the tracking device comprises a first radio module, and wherein the method comprises the following steps performed by the tracking device:
a) performing a wake-up procedure comprising at least:
   - obtaining a pre-agreed wake-up plan used by the recovery device for transmitting wake-up command messages to the tracking device, and wherein the wake-up plan comprises at least a plurality of subsequent transmit time slots and a first sequence of channel frequencies defining for each of the subsequent transmit time slots a corresponding channel frequency,
   - detecting with the first radio a presence of channel activities in correspondence with the wake-up plan,
   - if the presence of channel activities is detected, then using the first radio and transmitting a wake-up response message to the recovery device, and wherein the wake-up response message comprises at least the tracking device ID,
b) following the wake-up procedure, performing a tracking procedure to allow the recovery device to recover the tracking device, the tracking procedure comprising at least:
   - obtaining a pre-agreed tracking plan comprising a sequence of time slots wherein one or more first transmit time slots alternate with one or more second transmit time slots, and wherein the first and second transmit time slots are reserved for transmitting messages by respectively the tracking device and the recovery device, and wherein the pre-agreed tracking plan comprises a second sequence of channel frequencies defining for each of the first and second transmit time slots a corresponding channel frequency,
   - transmitting first tracking messages with the first radio module to the recovery device during the first transmit time slots at channel frequencies as defined by the second sequence of channel frequencies.

Establishing a point-to-point wireless communication link between the tracking device and the recovery device, allows the recovery device to recover the tracking device when the tracking device has been stolen or has been missing.

Advantageously, as the transmission of first tracking messages by the tracking device to the recovery device for tracking purposes is only performed when the tracking device has detected that the recovery device is within a detectable range by first performing the wake-up procedure, the power consumption of the battery of the tracking device during recovery of the tracking device is limited. Indeed, as long as the presence of the recovery device is not detected during the wake-up procedure, the higher power consuming tracking procedure involving the transmission of tracking messages is not started.

In embodiments, the step of detecting a presence of channel activities comprises detecting one or more RF signals and identifying a carrier frequency of each of the one or more RF signals detected and comparing the carrier frequencies identified with frequencies of the first sequence of channel frequencies as obtained from the wake-up plan. In embodiments, the step of detecting a presence of channel activities comprises detecting subsequent RF signals and identifying a carrier frequency of each of the subsequent RF signals detected and comparing the carrier frequencies identified with frequencies of the first sequence of channel frequencies as obtained from the wake-up plan.

In embodiments, the tracking device further comprises a second radio module and wherein the first and second radio module are configured for operating within respectively a first and second frequency band, and wherein the second frequency band is different from the first frequency band. In these embodiments, the tracking procedure of the tracking device further comprises:
- transmitting second tracking messages with the second radio module to the recovery device during the first transmit time slots.

In embodiments, the first frequency band is in a range between 400 MHz and 1 GHz and the second frequency band is in a range between 2 GHz and 3 GHz.

Advantageously, transmitting first and second tracking messages in a different frequency band, will allow the recovery device to more efficiently track the tracking device.

According to the present disclosure a method is provided for establishing a point-to-point wireless communication link between a tracking device and a recovery device, wherein the recovery device comprises a first radio module for transmitting and receiving RF messages, and wherein the method comprises the following steps performed by the recovery device:
- obtaining a pre-agreed wake-up plan comprising a plurality of subsequent transmit time slots for transmitting wake-up command messages to the tracking device, and a first sequence of channel frequencies defining for each of the subsequent transmit time slots a corresponding channel frequency,
- transmitting a wake-up command message during each of the transmit time slots according to the wake-up plan and wherein a carrier frequency of each wake-up message corresponds to the channel frequency of the corresponding transmit time slot as determined by the wake-up plan,
- receiving a wake-up response message from the tracking device, wherein the wake-up response message comprise a tracking device ID,
- obtaining a pre-agreed tracking plan as agreed for the tracking device having the tracking device ID, and wherein the tracking plan comprises a sequence of time slots wherein one or more first transmit time slots alternate with one or more second transmit time slots, and wherein the first and second transmit time slots are reserved for transmitting messages by respectively the tracking device and the recovery device, and wherein the tracking plan comprises a second sequence of channel frequencies defining for each of the first and second transmit time slots a corresponding channel frequency,
- opening listen time slots coinciding with the first transmit time slots as defined by the tracking plan,
- with the first radio module: receiving during the listen time slots first tracking messages from the tracking device.

The wake-up plan and the tracking plan obtained by the recovery device is the same wake-plan and tracking plan as obtained by the tracking device.

The present disclosure is also related to a tracking device and recovery device that comprise respective computer programs comprising processor-executable instructions that when executed by respective processors of the tracking device and the recovery device cause the tracking device and the recovery device to perform the wake-up procedure and the tracking procedure.

### Short description of the drawings

These and further aspects of the present disclosure will be explained in greater detail by way of example and with reference to the accompanying drawings in which:
- Fig. 1a: schematically illustrates a block diagram of an embodiment of a tracking device according to the present disclosure,
- Fig. 1b: shows an isometric view of an embodiment of a tracking device according to the present disclosure,
- Fig.2: schematically illustrates a tracking device and a recovery device in an loT-network environment,
- Fig.3a and Fig.3b: schematically illustrate examples of a wake-up plan comprising transmit time slots used by the recovery device for transmitting wake-up command messages,
- Fig.4: illustrates a block diagram of method steps for performing a wake-up and tracking procedure according to an embodiment of the present disclosure,
- Fig.5: illustrates an example of a tracking plan comprising first transmit time slots and first listen time slots used by the tracking device and second transmit time slots and second listen time slots used by the recovery device.

The drawings of the figures are neither drawn to scale nor proportioned. Generally, identical components are denoted by the same reference numerals in the figures.

### Detailed description of embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

### Tracking device, general

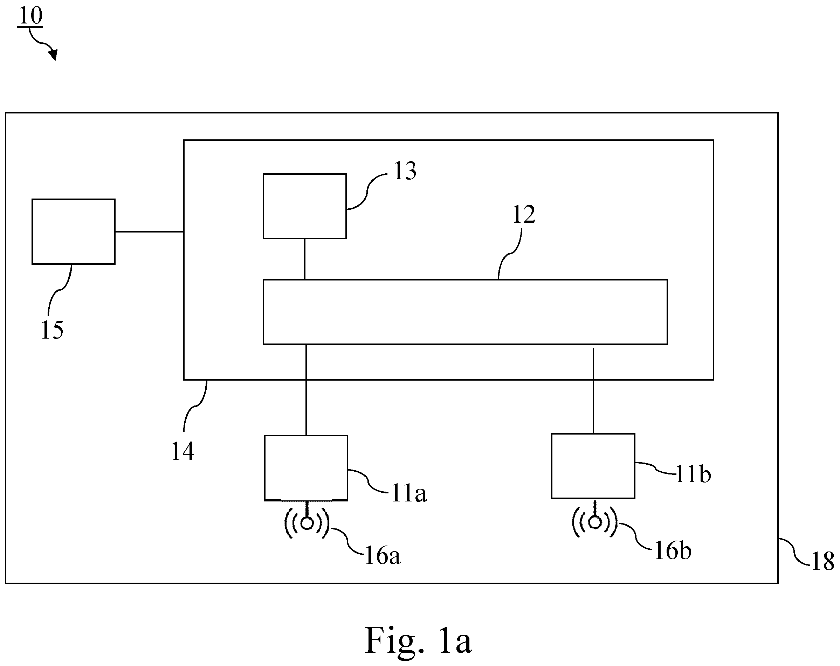

A block diagram of an example of an embodiment of a tracking device 10 is schematically shown on Fig. 1a. The tracking device comprises at least one or more radio modules 11a, 11b, one or more antennas 16a, 16b, a processor 12, one or more computer-readable storage media 13 and a battery 15. In embodiments the processor 12 and one or more computer-readable storage media 13 are part of a system-on-chip (SOC) 14. The tracking device further comprises a protecting housing 18. The battery is for example a primary battery or a rechargeable battery.

Each of the one or more radio modules 11a, 11b comprises communication circuitry configured for sending and receiving RF messages. Typically, a radio module comprises an RF modulator and an RF demodulator.

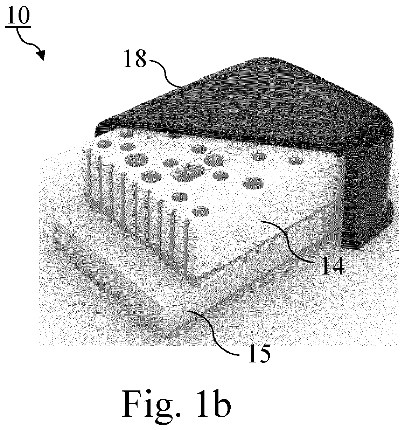

With reference to Fig. 1b, an isometric view is shown of a tracking device according to the present disclosure. The tracking device is a compact device that can be inserted or attached to an object to be tracked.

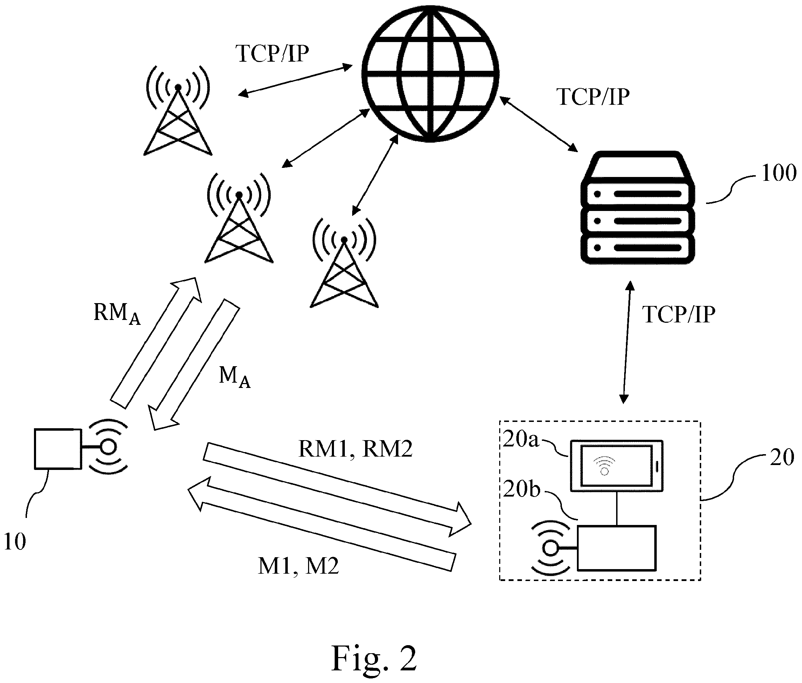

As known in the art, tracking devices 10 are configured to communicate with an application server 100 or host, e.g. through a communication network as schematically illustrated on Fig.2. The tracking devices 10 according to the present disclosure are characterized in that they are configured for additionally communicating with a dedicated recovery device 20 by establishing a point-to-point communication link between the tracking device and a recovery device. The recovery device 20 is a device that is used to search and precisely locate the tracking device when the tracking device is missing and/or communication with the application server is lost.

The tracking device according to the present disclosure comprises at least a first radio module 11 configured for transmitting and receiving RF messages.

In embodiments, the first radio module of the tracking device can be used to both communicate with the application server as well as communicate with the recovery device 20.

In other embodiments the tracking device comprises a second radio module wherein the first and second radio module are used to respectively communicate with the recovery device 20 and with the application server 100.

In further embodiments, the tracking device comprises a first 11a and a second 11b radio module, and wherein both the first and the second radio module are configured for communicating with the recovery device 20. Generally, in these embodiments, the first and the second radio module are configured for operating within respectively a first and second frequency band, and wherein the second frequency band is different from the first frequency band. For example, the first radio module is configured for operating at a channel frequency that is comprised in a range between 400 MHz and 1 GHz and the second radio module is configured for operating at a channel frequency that is comprised in a range between 2 GHz and 3 GHz. In this way, as discussed below in more detail, during a tracking procedure, the tracking device 10 can transmit to the recovery device 20 first tracking messages with the first radio module 11a at a first channel frequency and second tracking messages at a second channel frequency with the second radio module 11b.

In embodiments comprising a first 11a and a second 11b radio module, the first and the second radio module are configured for simultaneously transmitting RF messages and/or for simultaneously receiving RF messages.

In embodiments, the first and second radio module comprise respectively a first and second clock defining a timing for transmitting and receiving RF messages, and wherein the first and second clock are synchronized such that the first and second radio module can transmit and/or receive RF messages at the same time.

In embodiments, the first radio module uses a first modulation technique and the first modulation technique is for example any of: frequency shift keying FSK, binary phase shift keying BPSK, Gaussian frequency shift keying GFSK, spread spectrum modulation, chirp spread spectrum CSS modulation. An example of CSS modulation is known as LoRa.

In embodiments, the first radio module of the tracking device is a radio module for long-range low-power communication. Such a long-range low-power radio module distinguishes from a radio module for short-range communication using for example Bluetooth technology. The long-range low-power radio module also distinguished from high-power cellular communication technology.

In embodiments, the first radio module, being a long-range low-power radio module, is configured for sending and receiving RF messages at a carrier frequency that is comprised in a range between 400 MHz and 1GHz.

The long-range low power first radio module is also characterized by a low bandwidth. In embodiments, the first radio module is configured for sending and receiving RF messages in a bandwidth that is comprised in a range between 5 kHz and 900kHz, preferably between 50 kHz and 700 kHz, more preferably between 60 kHz and 600 kHz.

In embodiments, wherein the tracking device comprises a second radio module, different from the first radio module, .the second radio module is for example a short-range radio module applying Bluetooth technology such as a BT or BLE.

In embodiments, the second radio is configured for transmitting and receiving RF messages according to a second modulation technique and wherein the second modulation technique is different from the first modulation technique.

In other embodiments, the modulation technique applied by the second radio module is the same modulation technique as applied by the first radio module.

In further embodiments, the tracking device further comprises a Wi-Fi radio module.

In embodiments, the tracking device is not necessarily configured for directly communicating over a network with the application server but communicates for example with a CPU located near the tracking device. For example a bike having a tracking device can also have a separate CPU with GPS mounted on the bike. The tracking device can then wirelessly communicate with the CPU for example using BLE technology. In such a configuration, the separate CPU can be considered as a local host or local application server for the tracking device. The CPU can be in communication with a further application server using a network.

The tracking device comprises a unique identifier, in the present disclosure further named tracking device ID. The tracking device ID is for example a unique serial number or other code that allows to differentiate one tracking device from another. The tracking device ID is generally stored in a memory of the tracking device. The memory is generally a non-volatile memory such as for example a flash memory or any other type of non-volatile memory.

### Tracking device, power levels

In embodiments, the tracking device is configured for operating in different operational modes wherein each operational mode is characterized by a power level. As the power source of the tracking device is a battery, power consumption should be kept as low as possible in order to guarantee battery life time of several years, e.g. more than 5 years. The battery is for example a LiMnO2 battery having a capacity of 1200 mAh.

The tracking device comprises a normal operational mode which is the mode the tracking device is using for most of the time. When in normal operational mode and when not transmitting or not listening with any of the radio modules of the tracking device, the tracking device is in a sleep state, which is a state where power consumption is at a lowest level. In this sleep state, power consumption is less than 3 microAh.

When in normal operational mode, the tracking device communicates with the application server, also named host or back-end. As schematically illustrated on Fig.2, the tracking device communicates for example over an loT-network with the application server 100.

In embodiments, for example a LoRaWAN network architecture can be used wherein gateways relay messages between the tracking devices and a central network server. The gateways are connected to the network server via standard IP connections and act as a bridge, for converting RF packets to IP packets and vice versa. The application server is coupled with the network via standard IP connections. The wireless communication of the tracking device takes advantage of the long range characteristics of the LoRa physical layer.

The communication between the tracking device 10 and the application server 100 is however limited to keep power consumption of the tracking device as low as possible.

Typically, when in normal operational mode, at regular time intervals, e.g. a few times per 24 hours, the tracking device is sending an alive message RM_{A} to an application server and/or is listening for a potential message M_{A} from the application server. In embodiments, after sending an alive message, i.e. an uplink message RM_{A}, the tracking device opens a listening time slot for receiving a potential message from the application server, i.e. a downlink M_{A}. The number of times the tracking device is sending an uplink message can be programmed depending on the application the tracking device is used for. The frequency of receiving a downlink and/or sending an uplink can range for example from once every 30 minutes to once per 24 hours.

Generally, when the tracking device is coupled via a network to the application server, a dedicated application of the application server can use the alive messages from the tracking device to for example determine a rough position of the tracking device based on the network gateway locations having received the alive messages and/or based on the signal strength of the alive message received.

In some embodiments, wherein the tracking device comprises a WiFi-radio, when in normal operational mode, the tracking device can detect Wi-Fi access points using the WiFi-radio module and broadcast a message comprising access point data to the application server. These data can then be used by the application server to determine a location of the tracking device.

However, as mentioned above, position location based on network information is generally not accurate and also when a tracking device is located underground, communication with the application server can be lost. Therefore, the tracking device according to the present disclosure comprises besides the normal operational mode also a recovery operational mode.

When in recovery operational mode, the tracking device 10 establishes a point-to-point communication link with the recovery device 20. When in the recovery operational mode the tracking device 10 is first performing a wake-up procedure to detect if a recovery device 20 is within a detectable range from the tracking device 10 and secondly, when detected that a recovery device 20 is within range, the tracking device is performing a tracking procedure that allows the recovery device 20 to precisely track the location of the tracking device 10 and hence recover a missing or stolen object the tracking device is attached to.

The wake-up procedure and recovery procedure are defined for limiting power consumption as much as possible, as will be discussed in more detail below.

In embodiments, when the tracking device is in the normal operational mode, the tracking device switches to the recovery operational mode if a recovery event is detected. The recovery event is for example any of the following events: receiving a down-link signal from the application server comprising instructions to perform a wake-up procedure, not receiving a single message from the application server within a pre-defined time interval, or detecting a tamper event. For example if no downlink from the application server is received within 24 hours, the tracking device can be programmed to switch to the recovery operational mode and start the wake-up procedure. A tamper event is for example the housing 18 being removed from the tracking device.

In embodiments, when in the recovery operational mode, the tracking device switches back to the normal operational mode when receiving a recovery completion message from the recovery device or from the application server.

### Wake-up procedure and tracking procedure

As discussed above, the tracking device is configured to establish a point-to-point wireless communication link with the recovery device. Establishing such a point-to-point communication link allows the recovery device to recover, i.e. to precisely locate, the tracking device when the tracking device has for example been missing or been stolen.

The method for establishing the point-to-point wireless communication link between a tracking device and a recovery device comprises two main procedures: a) performing a wake-up procedure using the first radio module for detecting if the recovery device is within a detectable range from the tracking device and, if the recovery device is within a detectable range, then transmitting the tracking device ID to the recovery device, and b) following the wake-up procedure, performing a tracking procedure using the first radio module to allow the recovery device to recover the tracking device. In some embodiments, a second radio module is used in addition to the first radio module for improving the efficiency of performing the tracking procedure.

As long as the tracking device has not successfully performed the wake-up procedure, tracking procedure will not start. In other words, as long as the tracking device is not sure that a recovery device is within a detectable range it will not start with a power consuming tracking procedure. During wake-up, the power consumption is kept low and the tracking device only transmits a message if a recovery device is within a detectable range. The wake-up and tracking procedures are further discussed in more detail here below.

### Wake-up procedure:

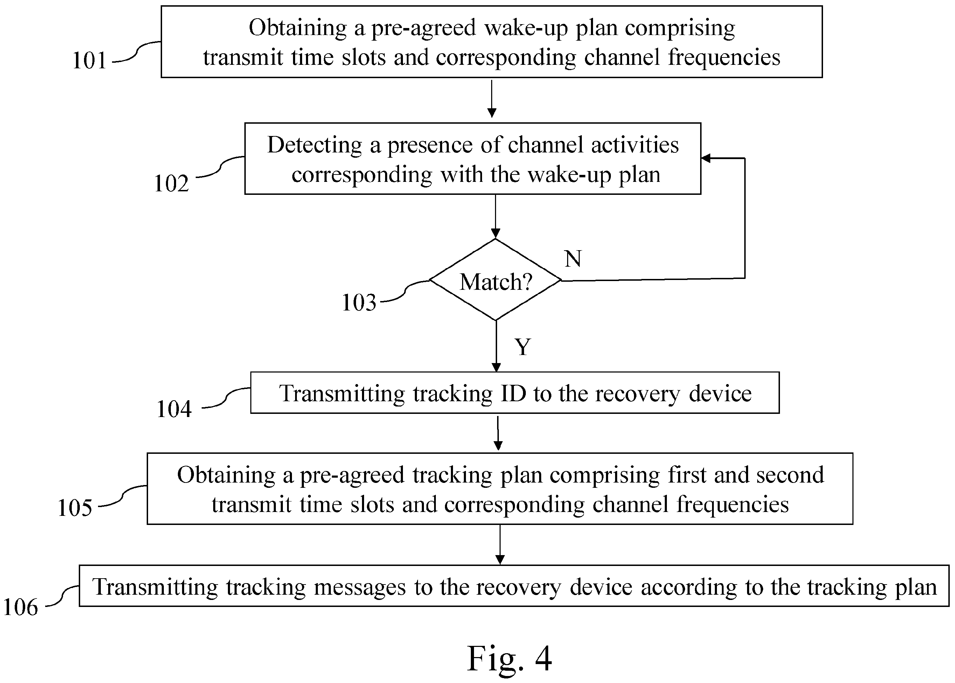

The wake-up procedure, performed by the tracking device, is a procedure for detecting if the recovery device 20 is within a detectable range from the tracking device 10. With reference to Fig.4, a block diagram is shown wherein steps 101 to 104 illustrate steps of the wake-up procedure according to an embodiment of the present disclosure. The wake-up procedure, comprising at least steps 101 to 104, is followed by a tracking procedure comprising at least steps 105 and 106 illustrated on Fig.4.

At step 101, the detection of the recovery device 20 being within a detectable range from the tracking device 10 comprises obtaining a pre-agreed wake-up plan. The pre-agreed wake-up plan comprises one or more sequences of transmit time slots wherein each time slot defines a time period used by the recovery device for transmitting a wake-up command message and wherein a channel frequency is associated to each of the transmit time slots. The channel frequencies of the transmit time slots correspond to the carrier frequencies for transmitting the wake-up command messages.

In embodiments, the tracking device and the recovery device use a cryptographic algorithm to generate the sequence of frequencies of the wake-up plan based on a first cryptographic key. The first cryptographic key, which also can be named wake-up key, is a cryptographic key that is known both by the tracking device and by the recovery device.. As both the tracking device and the recovery device use the same first cryptographic key, the same sequence of frequencies can be determined by both the tracking device and the recovery device. Various frequency hopping algorithms based on cryptographic keys are known in the art and can be used to determine the sequence of wake-up frequencies.

In embodiments, obtaining a pre-agreed wake-up plan comprises calculating the first sequence of channel frequencies using a cryptographic algorithm or a secure hopping algorithm, generally making use of a secret key or cryptographic key.

In embodiments, obtaining a pre-agreed wake-up plan comprises calculating the first sequence of channel frequencies using a first cipher algorithm and a first cryptographic key. For example, a known AES-CTR encryption algorithm can be used to generate the channel sequence.

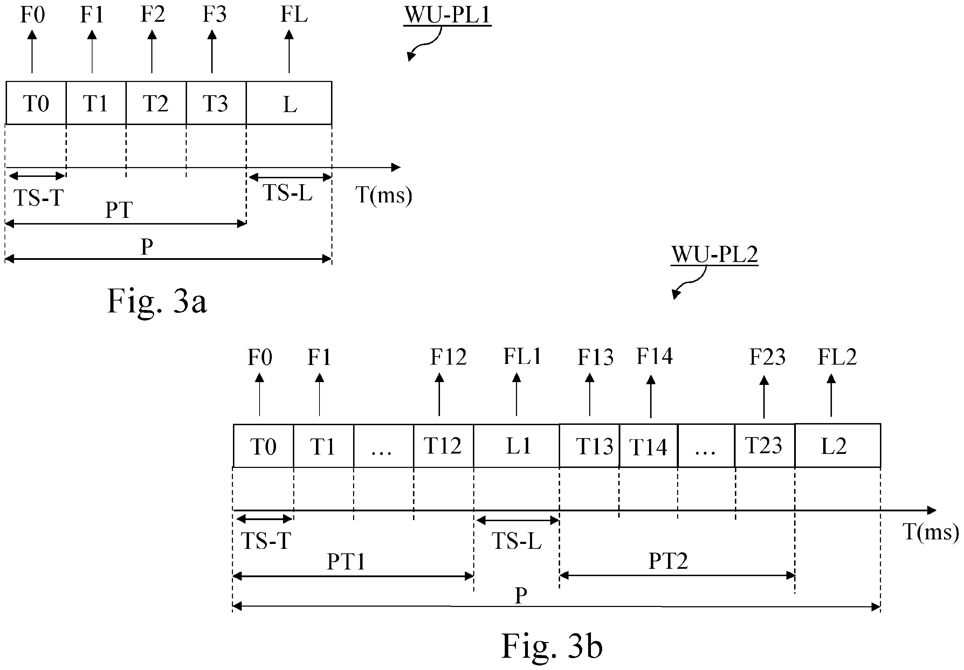

In Fig.3a and Fig.3b, two examples of wake-up plans comprising transmit time slots that can be used by the recovery device are shown. The number and duration of the time slots is determined taking into account national regulations and hence vary from country to country. National regulates limit for example the maximum time on air and the duty cycle. The recovery device uses the time slots and associated frequencies for transmitting a wake-up command message per transmit time slot. Each wake-up command message transmitted by the recovery device has a carrier frequency corresponding to the channel frequency defined for the corresponding time slot.

With reference to Fig.3a, an example of a pre-agreed wake-up plan WU-PL1 comprising time slots that for example can be used in Europe is shown. The plan defines a sequence PT of four transmit timeslots T0 to T3 which, in this example, are followed by one listen time slot L. The entire sequence of transmit and listen time slots, defined by a total period P, is then cyclically repeated. The duration TS-T of a transmit time slot is for example 400 ms. For each time slot T0 to T3 a different frequency F0 to F3 is defined. In other words, a first sequence of channel frequencies F1, F2, F3, F4 is defining for each of the subsequent transmit time slots a corresponding channel frequency. In this example there is one listen time slot L with time duration TS-L and an associated listen frequency FL.

With reference to Fig.3b, an example of a pre-agreed wake-up plan WU-PL2 comprising time slots that could for example be used in US is shown. The wake-up plan defines in this example 27 time slots in total, 25 transmit time slots T0 to T25, and two listen time slots L1 and L2. This exemplary wake-up plan comprises two transmit sequences PT1 and PT2. The entire sequence of transmit and listen time slots, defined by a total period P, can then cyclically be repeated.

At step 102 shown in Fig.4, the wake-up procedure further comprises detecting with the first radio a presence of channel activities in correspondence with the wake-up plan. A presence of channel activities detected has to be construed as a presence of RF signals at a channel frequency corresponding to a channel frequency defined by the wake-up plan.

Generally, detecting a presence of channel activities comprises detecting one or more RF signals and identifying a carrier frequency of the one or more RF signals detected and comparing the carrier frequencies identified with the frequencies of the first sequence of channel frequencies as obtained from the wake-up plan. In embodiments, detecting a presence of channel activities further comprises measuring a signal strength of the one or more RF signals.

In embodiments, the channel activity detection comprises: detecting a sequence of RF signals, identifying the carrier frequency of each of the RF signals and comparing the successive carrier frequencies with successive channel frequencies associated to successive transmit time slots as determined by the wake-up plan.

The identification of a match in step 103 between detected channel activity and expected channel activity according the wake-up plan, reflects that the recovery device is within a detectable range of the tracking device.

The detection of a presence of channel activity and the verification that the channel activity corresponds with channel activity from the recovery device, i.e. channel activity resulting from signals transmitted according to the wake-up plan, can be performed by algorithms known in the art.

In embodiments, these algorithms perform the activity detection for example in two phases. During a first phase the method comprises: randomly selecting a channel frequency from the channel frequencies known from the wake-up plan, detecting if there exists a channel activity on the randomly selected channel frequency, and if no channel activity is detected, then repeat the channel activity detection by selecting another channel frequency known from the wake-up plan. In embodiments, a history is kept of channel frequencies that have been checked before and channel frequencies that have been checked before have a lower likelihood of being checked again.

In embodiments, during a second phase of the activity detection algorithm, when an RF signal is detected at a first channel frequency of the first sequence of channel frequencies, a signal strength of this RF signal is compared with a pre-defined threshold level and if the signal strength is above a pre-defined threshold level, then the presence of channel activities corresponding with the wake-up plan is considered to be detected. In other words, if the recovery device is for example very close to the tracking device and hence the signal strength of the wake-up command messages from the recovery device as detected by the tracking device is high, the tracking device can already after detecting a first RF signal at a frequency according to the wake-up plan, conclude that the RF signal received is a wake-up command message from the recovery device and that hence, the recovery device is within a detectable range from the tracking device.

In embodiments, during a second phase of the activity detection algorithm, the method comprises: if channel activity is detected at a first channel during a first time slot, then performing at least one additional channel activity detection at a second channel frequency at a second time slot subsequent to the first time slot, and wherein the second time slot and the second channel frequency are defined by the wake-up plan. If channel activity is detected on two or more subsequent time slots and channel frequencies as defined by the wake-up plan, then the presence of channel activities according to the wake-up plan is considered to be detected and hence the recovery device 20 is considered to be within a detectable range from the tracking device. In this way, even if the recovery device is located somewhat further away from the tracking device, by detecting subsequent RF signals at the right frequency according to the wake-up plan, the tracking device can conclude that the RF signals detected are originating from the recovery device and that hence the recovery device is present and within a detectable range of the tracking device.

Algorithms for channel activity detection are known in the art, and are sometimes also named carrier sensing or channel sensing algorithms. For example when using LoRa as a modulation technique, a channel activity detection algorithm for detection channel activity in one channel, is known under the name CAD and is commercially available. As mentioned above, with the present method channel activity is performed for successive timeslots and different channels. With the present algorithm, successive single channel CAD's are performed at different channels in order to detect the presence of channel activity at different frequencies and successive timeslots.

At step 103 shown on Fig.4, if there is a match, i.e. a channel activity is detected corresponding with the wake-up plan, then the method proceeds to step 104. If no match is found, the method will proceed with repeating the detection of channel activity after a given waiting time has lapsed.

In embodiments, if channel activity is detected corresponding with the wake-up plan, the method comprises a step of synchronizing an internal clock of the first radio module of the tracking device based on the presence of channel activities detected.

At step 104, the wake-up procedure concludes with transmitting a wake-up response message RM1 to the recovery device. The wake-up response message RM1 comprises at least the tracking device ID. The tracking device ID is an unique identification associated to the tracking device. In this way, the recovery device, when receiving the tracking device ID, knows what tracking device is nearby.

In embodiments, before performing step 104, the wake-up procedure performs a further step of: opening a listen time slot coinciding with a next transmit time slot wherein a wake-up message is to be transmitted according to the wake-up plan, and listening at a listen frequency corresponding with a channel frequency associated to the next transmit time slot. Indeed, as at step 102 the tracking device has identified with the first radio a succession of signals that are transmitted according the wake-up plan as defined by the wake-up plan, the tracking device knows when to expect further RF signals transmitted by the recovery device and at what channel frequency.

In embodiments, the start time of the listen time slot of the recovery device, is considered as a first synchronization reference time, synchronizing the tracking device with the recovery device. In embodiments, if during further operations, the tracking device receives new messages from the recovery device, the start of the message can be used as a new synchronization reference time. In this way, by regularly refreshing synchronization, there is no clock drift between the clock of the tracking device and the clock of the recovery device.

In embodiments, the method comprises a further step of reading a wake-up command message received during the listen time slot. The wake-up command message transmitted by the recovery device comprises timing information defining a next listen time slot (L, L1, L2) of the recovery device and comprises required radio settings for transmitting a wake-up response message comprising the tracking device ID. The timing information is for example the start time of the listen time slot of the recovery device.

During the wake-up procedure, the power consumption by the tracking device is low. Indeed, the power consumption when using a channel activity detection according to the present disclosure remains limited. During channel activation detection, the tracking device does not to have to detect the entire message but only has to detect a portion of the message to determine its carrier frequency. For example, activity detection can be based on the preamble of the message or based on a portion of the payload of the message. In embodiments, one or two symbols of the message are sufficient for performing one CAD check for one time slot.

Tests performed with a tracking device according to the present disclosure using a LoRa CAD channel activity detection algorithm result in for example an average power consumption of 66 microAh for performing the entire channel activity detection at different time slots and frequencies when performing single CAD's every 3.2 seconds. This power consumption is to be compared with the lowest power status of the tracking device, i.e. when in sleep status not transmitting or listening, where the average power consumption is of the order of 3 microAh.

With the present method, the number of single CAD checks to be performed before having a first match is also limited, especially with the wake-up plan as shown on Fig.3a where only four transmit channels are used and the number of available channels that are authorized to be use is low. Also, the total time period for performing the channel activity detection of a successive number of time slots according to the wake-up plan is short. For example, if performing single CAD's every 1.6 seconds, the entire wake-up procedure is completed after 10 seconds.

### Tracking procedure:

In embodiments, following the wake-up procedure, a tracking procedure is performed using the first radio module. The tracking procedure allows the recovery device to recover the tracking device. As illustrated on Fig.4, the tracking procedure comprises a step 105 of obtaining a pre-agreed tracking plan comprising first and second transmit time slots and corresponding channel frequencies. More specifically, the pre-agreed tracking plan comprises a sequence of time slots wherein one or more first transmit time slots T1 alternate with one or more second transmit time slots T2, and wherein the first and second transmit time slots are reserved for transmitting messages by respectively the tracking device and the recovery device. The pre-agreed tracking plan T-PL comprises a second sequence of channel frequencies defining for each of the first and second transmit time slots a corresponding channel frequency. The channel frequencies defined for the first transmit time slots are the channel frequencies to be used by the radio module of the tracking device to transmit the tracking messages to the recovery device, and the channel frequencies defined for the second transmit time slots are the channel frequencies to be used by the radio module of the recovery device to transmit for example feedback messages to the tracking device.

In embodiments, obtaining a pre-agreed tracking plan comprises calculating the second sequence of channel frequencies using a second cipher algorithm and a second cryptographic key.

In embodiments obtaining a pre-agreed tracking plan comprises calculating the second sequence of channel frequencies using a secure hopping algorithm with a secret key or cryptographic key.

The tracking procedure further comprises repetitively transmitting first tracking message RM2 for the recovery device according to the pre-agreed tracking plan, as illustrated by step 106 on Fig.4. The first tracking messages RM2 are transmitted with the first radio module during the first transmit time slots at channel frequencies as defined by the second sequence of channel frequencies.

In embodiments, the tracking message RM2 is encrypted using a second cryptographic key different from the first cryptographic key.

The second cryptographic key is a standard key known in the art which is used in combination with known cryptographic algorithms.

In embodiments, the second cryptographic key is for example an AES-CCM cryptographic key, e.g. a 128bit key. The second cryptographic key can also be named tracking key.

In embodiments, during tracking, the tracking device transmits tracking messages repetitively at a given frequency defined by the pre-agreed tracking plan, for example a tracking message is transmitted every second.

In embodiments, during tracking, the tracking device transmits tracking messages following a tracking plan wherein the tracking plan comprises a transmit time slot for transmitting the tracking message and a listen time slot for optionally listening for a feedback message from the recovery device.

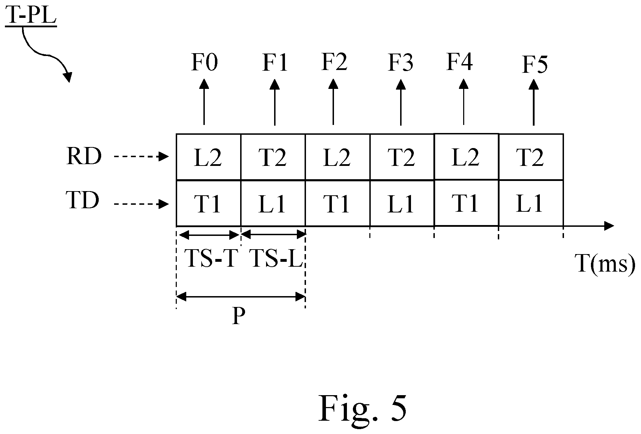

An example of a pre-agreed tracking plan T-PL is schematically illustrated on Fig.5 comprising first transmit time slots T1 and first listen time slots L1 used by the tracking device TD and second transmit time slots T2 and second listen time slots L2 used by the recovery device RD. In this example, the tracking plan for the tracking device TD comprises a transmit time slot TS-T of 500 ms followed by a listen time slot TS-L of 500 ms. Hence, in this example the period P is equal to 1 second. As the listen time slot L1 of the tracking device TD is optional in the sense that it is not necessarily or not always used for listening, it can also be named a waiting time slot. In embodiments, the tracking device uses the listen time slot TS-L of the tracking plan only every couple of cycles for listening for a feedback message of the recovery device. By only listening every couple of periods, power consumption of the tracking device is limited.

As schematically shown on Fig.5, the channel frequencies can vary from transmit time slot to transmit time slot according to a hopping scheme. In this example four channel frequencies F0 to F3 are used. The hopping scheme is defined with a hopping algorithm using the second cryptographic key.

During the listen time slot L1 of the tracking device TD, if the tracking device is listening for receiving a feedback message from the recovery device, it will listen at a given channel frequency that is defined by the second sequence of channel frequencies.

In embodiments, the tracking procedure further comprises steps of receiving a feedback message from the recovery device 20 encrypted according to the second cryptographic key, and wherein the feedback message comprises signal strength RSSI data with respect to a previously sent tracking message. The method further comprises adjusting a link budget for transmitting a next tracking message based on the signal strength RSSI data received. In this way the tracking device can adjust the signal strength of the tracking message sent. For example if the recovery device is coming closer to the tracking device, the signal strength can be reduced. Hence power consumption of the battery of the tracking device is further optimized and time on air is optimized.

In embodiments, the tracking procedure further comprises: stopping transmitting the tracking message and restarting the wake-up procedure if no feedback message from the recovery device has been received within a pre-defined time period. In this way, by immediately stopping transmitting the tracking message when the recovery device is potentially not anymore within a detectable distance, unnecessary power consumption of the battery of the tracking device is avoided.

In embodiments, as discussed above, the tracking device further comprising a second radio module 11b and wherein the first and second radio module are configured for operating within respectively a first and second frequency band. In these embodiments, the tracking procedure further comprises a step of transmitting second tracking messages with the second radio module to the recovery device during the first transmit time slots. In other words, both first and second tracking messages are transmitted with respectively the first and second radio module during the tracking procedure. As further discussed below, transmitting two different tracking messages at different frequencies allows the recovery device to localize the tracking device in an efficient way.

In embodiments comprising a first and a second radio module for transmitting respectively first and second tracking messages, the pre-agreed tracking plan comprises a third sequence of channel frequencies defining for each of the first and second transmit time slots a corresponding channel frequency for the second radio module. In embodiments, this third sequence of channel frequencies can be calculated with the cipher algorithm and the second cryptographic key used for defining the second sequence of channel frequencies for the first radio module, or alternatively a further cryptographic key different from the second cryptographic key can be used for calculating the channel frequencies for the second radio module.

In embodiments of tracking devices comprising a first and a second radio module, the first and the second radio module are configured for simultaneously transmitting and/or receiving RF messages. For instance, during the tracking procedure, the first and second tracking messages are transmitted within the same transmit time slots of the pre-agreed tracking plan.

The tracking device according to the present disclosure comprises a computer-readable storage medium 13 storing a computer program comprising processor-executable instructions that when executed cause the tracking device to establish the point-to-point wireless communication link between the tracking device 10 and the recovery device 20 including the wake-up procedure and the tracking procedure as discussed above. The processor 12 of the tracking device is adapted to execute this computer program for performing the wake-up procedure and the tracking procedure.

### Recovery device, general

When an object comprising the tracking device is missing or stolen, generally a rough position of the last known location of the object can be obtained from the application running on the application server. The last known position of the object can also be communicated to a recovery agent by the person having lost his object. The recovery agent will then use the recovery device to recover the tracking device, i.e. precisely locate the tracking object based on RF signals received from the tracking device.

In other words, the recovery device 20 is a device used by a recovery agent which is a person that will go to the neighbourhood of the last known location of the missing object and use the recovery device to recover the missing object by establishing a point-to-point wireless communication link between the tracking device and the recovery device.

As the radio of the tracking device 10 is generally a long-range low power radio as discussed above, signals emitted by the tracking device can be detected by the recovery device over long ranges of for example 1 or more km in rural areas and hundreds of meter in urban areas. Hence even if the recovery agent is relatively far away from the object to look for, he will still be able to recover the object.

The recovery device comprises at least a user interface having a display, a radio module configured for transmitting and receiving RF messages, a power supply such as for example a battery for powering the recovery device and a processor. During the tracking procedure of the tracking device as discussed above, the recovery device receives the tracking messages from the tracking device.

In embodiments, the recovery device comprises a geographic position determining device configured for determining a location of the recovery device, displaying a geographic map on the display and visualizing the location of the recovery device on the geographic map with a position identifier, and adjusting a color and/or a size of the position identifier in accordance with the measured signal strength of the tracking message received from the tracking device.

Typically the recovery agent will, after having received first tracking messages from the tracking device, move with the recovery device to another location where new tracking message from the tracking device are received. Based on the signal strength of the tracking messages after having moved to another location, the recovery agent knows if he is coming closer to the object or is moving further away from the object.

In embodiments, when the recovery agent is arriving at a first starting location to start searching for the object, he can make a directional scan by making a rotational movement with the recovery device and acquire tracking messages from the tracking device while the tracking device is oriented in different directions, more specifically while the antenna of the radio module is oriented in different directions. In this way, based on the signal strength of the tracking messages received, the recovery agent knows in what direction to proceed to recover the object.

In embodiments, the recovery device 20 comprises one or more directional antennas configured for obtaining directional information of RF messages received. In other embodiments the recovery device comprises an antenna array configured for obtaining directional information of RF messages received. In this way, the search area to search for the tracking device can be narrowed down.

In further embodiments, the recovery device comprises an antenna assembly having at least one directional and at least one omnidirectional antenna, and the recovery device is configured to simultaneously use the at least one directional and the at least one omnidirectional antenna for capturing RF signals. Advantageously, this increases coverage, reduces multipath errors and it allows to implement a MIMO architecture.

In embodiments the recovery device comprises a plurality of radio modules configured for transmitting and receiving RF messages. For example a first and a second radio module that are configured for operating within respectively a first and second frequency band different from the first frequency band. For example, the first frequency band is in a range between 400 MHz and 1 GHz and the second frequency band is in a range between 2 GHz and 3 GHz.

In embodiments, the first and the second radio module of the recovery device are configured for simultaneously transmitting RF messages and/or for simultaneously receiving RF messages. Advantageously, this reduces multipath errors and increases the precision of the measurements.

In embodiments, the recovery device comprises a first directional antenna coupled to the first radio module and a second directional antenna coupled to the second radio module. The first and second directional antenna are configured for capturing RF signals at frequencies within respectively the first frequency band of the first radio and second frequency band of the second radio. Both the first and second directional antenna have a high-sensitivity direction for capturing RF signals and a low-sensitivity direction for capturing RF signals, and the low-sensitivity direction of the first directional antenna is aligned with the high-sensitivity direction of the second directional antenna. In this way, a very high-resolution directional measurement can be performed. Aligned has to be construed as being oriented in the same direction.

In embodiments wherein the recovery device comprises a first and second radio module, a first clock of the first radio module is synchronized with a second clock of the second radio module such that RF messages can be transmitted and received at the same time. In this way, the measurements are coherent and the timing is facilitated.

As discussed above, in order the recovery device to be able to recover the tracking device, a point-to-point wireless communication link between the tracking device 10 and the recovery device 20 is established.

The method performed by the recovery device 20 for establishing a point-to-point wireless communication link between the tracking device 10 and the recovery device 20 comprises steps of:
- obtaining a pre-agreed wake-up plan WU-PL1, WU-PL2 comprising a plurality of subsequent transmit time slots T0, T1, T2, T3 for transmitting wake-up command messages to the tracking device 10, and a first sequence of channel frequencies F1, F2, F3, F4 defining for each of the subsequent transmit time slots a corresponding channel frequency,
- transmitting a wake-up command message M1 during each of the transmit time slots according to the wake-up plan and wherein a carrier frequency of each wake-up message corresponds to the channel frequency of the corresponding transmit time slot as determined by the wake-up plan,
- receiving a wake-up response message RM1 from the tracking device, wherein the wake-up response message comprise a tracking device ID,
- obtaining a pre-agreed tracking plan T-PL as agreed for the tracking device having the tracking device ID, and wherein the tracking plan comprises a sequence of time slots wherein one or more first transmit time slots alternate with one or more second transmit time slots, and wherein the first and second transmit time slots are reserved for transmitting messages by respectively the tracking device and the recovery device, and wherein the tracking plan comprises a second sequence of channel frequencies defining for each of the first and second transmit time slots a corresponding channel frequency,
- opening listen time slots coinciding with the first transmit time slots as defined by the tracking plan,
- with the first radio module: receiving during the listen time slots first tracking messages RM2 from the tracking device 10.

In embodiments wherein the recovery device uses cipher algorithms and cryptographic keys for determining the pre-agreed wake-up plan and the pre-agreed tracking plan, the algorithms and cryptographic keys used by the recovery device are the same as those used by the tracking device. In this way, the wake-up plan and tracking plan obtained with the recovery device is the same as the wake-up plan and tracking plan obtained by the tracking device.

In embodiments, the method further comprises measuring a signal strength of one or more of the first tracking messages RM2 received from the tracking device. Further, during one of the second transmit time slots, transmitting a feedback message M2 to the tracking device, and wherein the feedback message comprises the signal strength with respect to the one or more first tracking messages RM2 received.

In embodiments, each wake-up command message M1 comprises required radio settings to be used by the tracking device for transmitting the tracking device ID.

The pre-agreed wake-up plan and pre-agreed tracking plan obtained by the recovery device is the same wake-up plan and tracking plan obtained by the tracking device, discussed above. In other words, in embodiments wherein the wake-up plan and tracking plan are obtained based on cryptographic keys, the same cryptographic keys are used by the tracking device and by the recovery device.

In embodiments, obtaining a pre-agreed wake-up plan comprises calculating the first sequence of channel frequencies using a first cipher algorithm and a first cryptographic key. In embodiments, this first cipher algorithm and first cryptographic key used by the recovery device is the same algorithm and key used by the tracking device to obtain the pre-agreed wake-up plan.

In embodiments, obtaining a pre-agreed tracking plan comprises calculating the second sequence of channel frequencies using a second cipher algorithm and a second cryptographic key. In embodiments, this first cipher algorithm and first cryptographic key used by the recovery device is the same algorithm and key used by the tracking device to obtain the pre-agreed wake-up plan.

In embodiments, the feedback message M2, transmitted by the recovery device to the tracking device during the tracking procedure, is encrypted using the second cipher algorithm and the second cryptographic key.

In embodiments wherein the recovery device comprises a second radio module, the method performed by the recovery device for establishing a point-to-point wireless communication link between the tracking device and the recovery device further comprises a step of receiving with the second radio module during the listen time slots second tracking messages from the tracking device 10.

The recovery device 20 according to the present disclosure comprises a computer-readable storage medium storing a computer program comprising processor-executable instructions that when executed cause the recovery device to perform the method for establishing a point-to-point wireless communication link between the tracking device 10 and the recovery device 20 as discussed. The processor 12 of the recovery device is adapted to execute this computer program.

### System for recovering missing objects

The present disclosure also relates to a system for recovering a stolen or missing object comprising a tracking device and a recovery device as discussed above.

With one recovery device, multiple stolen objects can be recovered, one by one. In some embodiments, a client, for example a micro-mobility provider, can have multiple, e.g. hundreds of bikes each tagged with a recovery device. In these embodiments, each of the tracking devices of a client has the same wake-up plan, i.e. comprising the same first sequence of channel frequencies as for example defined through a first cipher algorithm and a first cryptographic key. Indeed, multiple bikes can be missing in the same area, and when the recovery agent is moving with the recovery device in an area where potentially multiple missing objects are located, when the recovery device is transmitting wake-up command messages, the recovery device can receive wake-up response messages from multiple tracking devices.

As discussed above, the tracking devices when having detected that the recovery device is within a detectable range, the tracking device transmits a wake-up response message RM1 comprising the tracking device ID.

In embodiments, if the recovery device receives multiple wake-up response messages from different tracking devices, the recovery agent can decide what tracking device, identified by a tracking device ID, to recover first. In other words, the recovery device is configured to allow the recovery agent to select what tracking device to recover if multiple tracking devices have transmitted wake-up response messages RM1.

Hence, for a system comprising a plurality of tracking devices and one recovery device, the plurality of tracking devices are configured for using the same wake-up plan, and each of the tracking devices is configured for using a tracking plan wherein the second sequence of channel frequencies is unique for each tracking device . In other words, the tracking plan is different for each of the tracking devices. The recovery device of such a system is configured for using the wake-up plan during wake-up that is common for all the tracking devices of the client and for using each of the unique tracking plans of the tracking devices during tracking of a selected tracking device. The recovery device is configured for selecting a tracking device through its tracking device ID and for obtaining the tracking plan with the unique second sequence of channel frequencies corresponding to the tracking device with the tracking device ID selected.

In embodiments, the recovery device is developed as an integrated single-body device, generally a hand-held device.

In other embodiments the recovery device 20 comprises two separate components or bodies 20a, 20b as schematically illustrated on Fig.2, wherein a first component 20a comprises at least the user interface with a display and a second component 20b comprising at least the radio module, antenna, and processor, and wherein the first and second component are linked together through a communication link.

In embodiments wherein the recovery device 20 comprises a first 20a and a second 20b component, the first component is for example a smartphone comprising a software application and the second component is a tracking tool comprising at least the radio module, the antenna and the processor. The smartphone and the tracking tool are connected through for example a short-range BLE link. The application app on the smartphone is used as a user interface for the tracking tool in order to visualize information in real time to the recovery agent during the wake-up procedure and tracking procedure of a tracking device, as discussed above. The application app can also receive data through the network, such as for example the last location of a missing tracking device.

In embodiments tracking devices are attached to battery packs.

In embodiments, a battery pack comprises a plurality of batteries, and wherein each battery has an identical outer battery shape, and the battery pack is characterized in that it further comprises a tracking device comprising a housing having an outer shape that is identical to the battery shape. In this way, the tracking device cannot be visually be distinguished from the batteries of the battery pack.

### Clauses

Here below, text is provided in the form of clauses. The clauses comprise characterizations indicating a variety of options, features, and feature combinations that can be used in accord with the teachings of the present disclosure. Alternate characterizations of the ones given, but consistent with the descriptions herein above, are possible In summary, according to the present disclosure, the following clauses could for instance be claimed:
1. A method for establishing a point-to-point wireless communication link between a tracking device (10) and a recovery device (20), wherein the tracking device (10) comprises a first radio module (11a), the method comprising the following steps performed by the tracking device (10):
   a) performing a wake-up procedure comprising at least:
      - obtaining a pre-agreed wake-up plan (WU-PL1, WU-PL2) used by the recovery device (20) for transmitting wake-up command messages (M1) to the tracking device (10), and wherein the wake-up plan comprises at least a plurality of subsequent transmit time slots (T0, T1, T2, T3) and a first sequence of channel frequencies (F1, F2, F3, F4) defining for each of the subsequent transmit time slots a corresponding channel frequency,
      - detecting with said first radio module a presence of channel activities corresponding with said wake-up plan,
      - if said presence of channel activities is detected, then using the first radio module and transmitting a wake-up response message (RM1) to the recovery device, and wherein the wake-up response message comprises at least the tracking device ID,
   b) following the wake-up procedure, performing a tracking procedure to allow the recovery device to recover the tracking device, the tracking procedure comprising at least:
      - obtaining a pre-agreed tracking plan (T-PL) comprising a sequence of time slots wherein one or more first transmit time slots (T1) alternate with one or more second transmit time slots (T2), and wherein said first and second transmit time slots are reserved for transmitting messages by respectively the tracking device and the recovery device, and wherein the pre-agreed tracking plan (T-PL) comprises a second sequence of channel frequencies defining for each of the first and second transmit time slots a corresponding channel frequency,
      - transmitting first tracking messages (RM2) with the first radio module to the recovery device during said first transmit time slots at channel frequencies as defined by said second sequence of channel frequencies.
2. The method of clause 1 wherein the step of detecting a presence of channel activities corresponding with the wake-up plan comprises detecting one or more RF signals, preferably detecting subsequent RF signals, identifying a carrier frequency of each of the RF signals detected and comparing the carrier frequencies identified with frequencies of said first sequence of channel frequencies as obtained from the wake-up plan.
3. The method of clause 1 wherein the step of detecting a presence of channel activities corresponding with the wake-up plan comprises sub-steps of:
   - randomly selecting a channel frequency from the first sequence of channel frequencies known from the wake-up plan,
   - detecting if there exists a channel activity on the randomly selected channel frequency,
   - if no channel activity is detected, then repeat the channel activity detection by selecting another channel frequency from the first sequence of channel frequencies known from the wake-up plan,
   - said presence of channel activities corresponding with the wake-up plan is considered to be detected if:
      A) an RF signal is detected at a first channel frequency of the first sequence of channel frequencies and a signal strength of the RF signal detected is above a pre-defined threshold level, or
      B) at least a first and a second RF signal are detected at respectively a first and a second channel frequency of the first sequence of channel frequencies during two successive transmit time slots as defined by the wake-up plan
4. The method of any of clauses 1 to 3 wherein obtaining a pre-agreed wake-up plan comprises calculating the first sequence of channel frequencies using a first cipher algorithm and a first cryptographic key.
5. The method of any of clause 1 to 4 wherein obtaining a pre-agreed tracking plan comprises calculating the second sequence of channel frequencies using a second cipher algorithm and a second cryptographic key.
6. The method of any of previous clauses wherein said first tracking messages (RM2) are encrypted.
7. The method of clause 5 wherein said first tracking messages are encrypted using said second cipher algorithm and said second cryptographic key.
8. The method of any of previous clauses wherein if said presence of channel activities in accordance with the wake-up plan is detected during the wake-up procedure then, then synchronizing an internal clock of the first radio module based on the presence of channel activities detected.
9. The method of any of previous clauses wherein if said presence of channel activities is detected during the wake-up procedure then, before transmitting the wake-up response message, performing:
   - opening a listen time slot coinciding with a next transmit time slot wherein a wake-up command message (M1) is to be transmitted by the recovery device according to said wake-up plan, and listening at a listen frequency corresponding with a channel frequency associated to said next transmit time slot,
   - receiving a wake-up command message during said listen time slot, wherein the wake-up command message received comprises at least required radio settings for transmitting the response message (RM1).
10. The method of any of previous clauses wherein the tracking procedure further comprises
   - at regular time intervals, opening a listen time slot coinciding with one of the second transmit time slots defined by the tracking plan (T-PL),
   - receiving a feedback message (M2) from the recovery device (20), and wherein said feedback message comprises signal strength data with respect to a previously transmitted first tracking message (RM2).
   - adjusting a link budget for transmitting next first tracking messages (RM2) based on said signal strength data received.
11. The method of clause 10 wherein the tracking procedure further comprises:
   - stopping transmitting first tracking messages (RM2) to the recovery device and restarting the wake-up procedure if no feedback message (M2) from the recovery device has been received within a pre-defined time period.
12. The method of any of previous clauses further comprising c) performing a normal operational procedure comprising steps of:
   - sending an alive message (RM_{A}) to an application server (100) using said first radio or, alternatively using a further radio module of the tracking device,
   - listening for messages (M_{A}) from the application server (100) using said first radio, or alternatively using the second radio.
13. The method of clause 12 wherein the normal operational procedure further comprises:
   - detecting a recovery event, and wherein a recovery event comprises any of: receiving a down-link signal from the application server (100) comprising instructions to perform a wake-up procedure, not receiving a single message from the application server within a pre-defined time interval, or detecting a tamper event,
   - starting the wake-up procedure if the recovery event is detected.
14. The method of any of clauses 1 to 11 wherein said tracking device (10) is operational in a normal operational mode and in a recovery operational mode, and wherein
   a) when in the normal operational mode then:
      - sending of an alive message to the application server using said first radio or, alternatively using a second radio of the tracking device, and listening for messages from the application server,
      - detecting of a recovery event, wherein a recovery event comprises any of: receiving a down-link signal from the application server (100) comprising instructions to perform a wake-up procedure, not receiving a single message from the application server within a pre-defined time interval, or detecting a tamper event,
      - switching from the normal operational mode to the recovery operational mode if the recovery event is detected,
   b) when in the recovery operational mode then performing said wake-up procedure and performing said tracking procedure.
15. The method of clause 14 further comprising, when in the recovery operational mode:
   - switching from the recovery operational mode to the normal operational mode when receiving a recovery completion message from the recovery device or from the application server.
16. The method of clause 14 or clause 15 wherein the tracking device comprises a WiFi-radio module and wherein when in normal operational mode, the method comprises:
   - detecting WiFi access points using the WiFi-radio module of the tracking device, and broadcasting a message comprising access point data to the application server.
17. The method of any of previous clauses wherein the tracking device further comprising a second radio module (11b) and wherein said first and second radio module are configured for operating within respectively a first and second frequency band, and wherein the second frequency band is different from the first frequency band, preferably the first frequency band is in a range between 400 MHz and 1 GHz and the second frequency band is in a range between 2 GHz and 3 GHz, and wherein the tracking procedure further comprises:
   - transmitting second tracking messages with the second radio module to the recovery device during said first transmit time slots.
18. The method of clause 17 wherein the pre-agreed tracking plan comprises a third sequence of channel frequencies defining for each of the first and second transmit time slots a corresponding channel frequency for the second radio module.
19. A computer program product comprising processor-executable instructions for performing the method according to any of clauses 1 to 18 when the computer program is run on a processor.
20. A computer-readable storage medium storing the computer program product according to clause 19.
21. A tracking device (10) comprising:
   - at least a first radio module (11a) configured for transmitting and receiving RF messages,
   - a battery (15) for powering the tracking device,
   - a computer-readable storage medium storing a computer program comprising processor-executable instructions that when executed cause the tracking device to perform the method according to any of clauses 1 to 16,
   - a processor (12) adapted to execute said computer program.
22. A tracking device (10) comprising:
   - a first radio module (11a) and a second radio module (11b) configured for transmitting and receiving RF messages, and wherein the first and the second radio module are configured for operating within respectively a first and second frequency band, and wherein the second frequency band is different from the first frequency band,
   - a battery (15) for powering the tracking device,
   - a computer-readable storage medium storing a computer program comprising processor-executable instructions that when executed cause the tracking device to perform the method according to clause 17 or clause 18,
   - a processor (12) adapted to execute said computer program.
23. The tracking device according to clause 22 wherein the first and the second radio module are configured for simultaneously transmitting RF messages and/or for simultaneously receiving RF messages.
24. The tracking device according to clause 22 or 23 wherein the first and second radio module comprise respectively a first and second clock defining a timing for transmitting and receiving RF messages, and wherein the first and second clock are synchronized such that the first and second radio module can transmit and/or receive RF messages at the same time.
25. The tracking device of any of clauses 22 to 24 wherein the second radio module is configured for operating at a channel frequency that is comprised in a range between 2 GHz and 3 GHz.
26. The tracking device of any of clauses 21 to 25 wherein the first radio module (11a) is configured for operating at a channel frequency that is comprised in a range between 400 MHz and 1GHz.
27. The tracking device of any of clauses 21 to 26 wherein the first radio module (11a) is configured for transmitting and receiving RF messages in a bandwidth that is comprised in a range between 5 kHz and 900 kHz, preferably between 50 kHz and 700 kHz, more preferably between 60 kHz and 600 kHz.
28. A method for establishing a point-to-point wireless communication link between a tracking device (10) and a recovery device (20), wherein the recovery device (20) comprises a first radio module for transmitting and receiving RF messages, the method comprising the following steps performed by the recovery device (20):
   - obtaining a pre-agreed wake-up plan (WU-PL1, WU-PL2) comprising a plurality of subsequent transmit time slots (T0, T1, T2, T3) for transmitting wake-up command messages to the tracking device (10), and a first sequence of channel frequencies (F1, F2, F3, F4) defining for each of the subsequent transmit time slots a corresponding channel frequency,
   - transmitting a wake-up command message (M1) during each of the transmit time slots according to the wake-up plan and wherein a carrier frequency of each wake-up command message corresponds to the channel frequency of the corresponding transmit time slot as determined by the wake-up plan,
   - receiving a wake-up response message (RM1) from the tracking device, wherein the wake-up response message comprise a tracking device ID,
   - obtaining a pre-agreed tracking plan (T-PL) as agreed for the tracking device having said tracking device ID, and wherein said tracking plan comprises a sequence of time slots wherein one or more first transmit time slots alternate with one or more second transmit time slots, and wherein said first and second transmit time slots are reserved for transmitting messages by respectively the tracking device and the recovery device, and wherein the tracking plan comprises a second sequence of channel frequencies defining for each of the first and second transmit time slots a corresponding channel frequency,
   - opening listen time slots coinciding with the first transmit time slots as defined by the tracking plan,
   - with the first radio module: receiving during said listen time slots first tracking messages (RM2) from the tracking device (10).
29. The method of clause 28 further comprising
   - measuring a signal strength of one or more of the first tracking messages (RM2) received from the tracking device,
   - during one of said second transmit time slots, transmitting a feedback message (M2) to the tracking device, and wherein said feedback message comprises the signal strength with respect to the one or more first tracking messages (RM2) received.
30. The method of clause 29 wherein said feedback message (M2) is encrypted.
31. The method of clause 28 to clause 30 wherein each wake-up command message (M1) comprises required radio settings to be used by the tracking device for transmitting the tracking device ID.
32. The method of any of clauses 28 to 31 wherein obtaining a pre-agreed wake-up plan comprises calculating the first sequence of channel frequencies using a first cipher algorithm, or alternatively a first secure hopping algorithm, and a first cryptographic key.
33. The method of any of clauses 28 to 32 wherein obtaining a pre-agreed tracking plan comprises calculating the second sequence of channel frequencies using a second cipher algorithm, or alternatively a first secure hopping algorithm, and a second cryptographic key.
34. The method of any of clauses 28 to 33 wherein the recovery device comprises a second radio module and wherein the method comprises:
   - with the second radio module: receiving during said listen time slots second tracking messages from the tracking device (10).
35. A recovery device (20) comprising:
   - a user interface comprising a display,
   - a first radio module configured for transmitting and receiving RF messages,
   - a power supply for powering the recovery device,
   - a computer-readable storage medium storing a computer program comprising processor-executable instructions that when executed cause the recovery device to perform the method according to any of clauses 28 to 33,
   - a processor adapted to execute said computer program.
36. A recovery device (20) comprising:
   - a user interface comprising a display,
   - a first radio module and a second radio module configured for transmitting and receiving RF messages, and wherein the first and the second radio module are configured for operating within respectively a first and second frequency band, and wherein the second frequency band is different from the first frequency band, preferably the first frequency band is in a range between 400 MHz and 1 GHz and the second frequency band is in a range between 2 GHz and 3 GHz.
   - a power supply for powering the recovery device,
   - a computer-readable storage medium storing a computer program comprising processor-executable instructions that when executed cause the recovery device to perform the method according to clause 34,
   - a processor adapted to execute said computer program.
37. The recovery device according to clause 36 wherein the first and the second radio module are configured for simultaneously transmitting RF messages and/or simultaneously receiving RF messages.
38. The recovery device according to clause 36 or 37 comprising a first directional antenna coupled to the first radio module and a second directional antenna coupled to the second radio module, and wherein each of the directional antennas has a high-sensitivity direction for capturing RF signals and a low-sensitivity direction for capturing RF signals, and wherein the low-sensitivity direction of the first directional antenna is aligned with the high-sensitivity direction of the second directional antenna, and wherein the first and second directional antenna are configured for capturing RF signals at frequencies within respectively said first and second frequency band.
39. The recovery device of any of clauses 36 to 38 wherein the first and second radio module comprise respectively a first and second clock defining a timing for transmitting and receiving RF messages, and wherein the first and second clock are synchronized such that the first and second radio module can transmit and/or receive RF messages at the same time.
40. The recovery device of any of clauses 35 to 39 further comprising a geographic position determining device configured for:
   i) determining a location of the recovery device,
   ii) displaying a geographic map on the display and visualizing the location of the recovery device on the geographic map with a position identifier,
   iii) adjusting a color and/or a size of the position identifier in accordance with a measured signal strength of the tracking messages received from the tracking device.
41. The recovery device of any of clauses 35 to 40 comprising either one or more directional antennas or an antenna array configured for obtaining directional information of RF messages received.
42. The recovery device of any of clauses 35 to 41 comprising an antenna assembly having at least one directional and at least one omnidirectional antenna, and wherein said recovery device is configured to simultaneously use the at least one directional and the at least one omnidirectional antenna for capturing RF signals.
43. A system for recovering a stolen or missing object, comprising
   - a tracking device (10) according to any of clauses 21 to 27, and
   - a recovery device (20) according to clause 35 or clause 42.
44. A system for recovering a stolen or missing object, comprising
   - a plurality of tracking devices (10) according to any of clauses 21 to 27, wherein the wake-up plan of each of the tracking devices is the same wake-up plan comprising the same first sequence of channel frequencies, and wherein for each tracking plan of the plurality of tracking devices the second sequence of channel frequencies is unique for each tracking device,
   - a recovery device (20) according to anyone of clauses 35 to 42, wherein the wake-up plan obtained by the recovery device is the same as the wake-up plan obtained by the plurality of tracking devices, and wherein the recovery device is configured for selecting a tracking device ID and for obtaining the tracking plan with the unique second sequence of channel frequencies corresponding to the tracking device with the tracking device ID selected.
45. A tracking device (10) comprising:
   - a first radio module (11a) and a second radio module (11b) configured for transmitting RF messages to a recovery device (20) and for receiving RF messages from the recovery device (20), and wherein the first and the second radio module are configured for operating within respectively a first and second frequency band, and wherein the second frequency band is different from the first frequency band,
   - a battery (15) for powering the tracking device,
   - a processor (12) configured to control said first and second radio module.
46. The tracking device according to clause 45 wherein the first and the second radio module are configured for simultaneously transmitting the RF messages to the recovery device and/or for simultaneously receiving RF messages from the recovery device.
47. The tracking device according to clause 45 or 46 wherein the first and the second radio module are configured for simultaneously transmitting respectively first and second tracking messages to the recovery device.
48. The tracking device according to clause 45 to 47 wherein the first and second radio module comprise respectively a first and second clock defining a timing for transmitting RF messages to the recovery device and/or for receiving RF messages from the recovery device , and wherein the first and second clock are synchronized such that the first and second radio module can transmit RF messages and/or receive RF messages at the same time.
49. The tracking device of any of clauses 45 to 48 wherein the second radio module is configured for operating at a channel frequency that is comprised in a range between 2 GHz and 3 GHz.
50. The tracking device of any of clauses 45 to 49 wherein the first radio module (11a) is configured for operating at a channel frequency that is comprised in a range between 400 MHz and 1GHz.
51. The tracking device according to any of clauses 45 to 50 wherein said first and second radio module are configured for transmitting tracking messages according to a pre-agreed tracking plan (T-PL) comprising a sequence of time slots wherein one or more first transmit time slots (T1) alternate with one or more second transmit time slots (T2), and wherein said first and second transmit time slots are reserved for transmitting messages by respectively the tracking device and the recovery device.
52. A recovery device (20) for recovering a tracking device comprising:
   - a user interface comprising a display,
   - a first radio module and a second radio module configured for transmitting RF messages to a tracking device (10) and for receiving RF messages from the tracking device (10), and wherein the first and the second radio module are configured for operating within respectively a first and second frequency band, and wherein the second frequency band is different from the first frequency band, preferably the first frequency band is in a range between 400 MHz and 1 GHz and the second frequency band is in a range between 2 GHz and 3 GHz.
   - a power supply for powering the recovery device,
   - a processor configured to control said first and second radio module.
53. The recovery device according to clause 52 wherein the first and the second radio module are configured for simultaneously transmitting RF messages to the tracking device and/or for simultaneously receiving RF messages from the tracking device.
54. The recovery device according to clause 52 or 53 comprising a first directional antenna coupled to the first radio module and a second directional antenna coupled to the second radio module, and wherein each of the directional antennas has a high-sensitivity direction for capturing RF signals and a low-sensitivity direction for capturing RF signals, and wherein the low-sensitivity direction of the first directional antenna is aligned with the high-sensitivity direction of the second directional antenna, and wherein the first and second directional antenna are configured for capturing RF signals at frequencies within respectively said first and second frequency band.
55. The recovery device of any of clauses 52 to 54 wherein the first and second radio module comprise respectively a first and second clock defining a timing for transmitting RF messages to the tracking device and/or for receiving RF messages from the tracking device, and wherein the first and second clock are synchronized such that the first and second radio module can transmit and/or receive RF messages at the same time.
56. The recovery device of any of clauses 52 to 55 comprising either one or more directional antennas or an antenna array configured for obtaining directional information of RF messages received.
57. The recovery device of any of clauses 52 to 55 comprising an antenna assembly having at least one directional and at least one omnidirectional antenna, and wherein said recovery device is configured to simultaneously use the at least one directional and the at least one omnidirectional antenna for capturing RF signals.
58. The recovery device according to any of clauses 52 to 57 wherein said first and second radio module are configured for transmitting tracking messages according to a pre-agreed tracking plan (T-PL) comprising a sequence of time slots wherein one or more first transmit time slots (T1) alternate with one or more second transmit time slots (T2), and wherein said first and second transmit time slots are reserved for transmitting messages by respectively the tracking device and the recovery device.
59. A system for recovering a stolen or missing object, comprising
   - a tracking device (10) according to any of clauses 45 to 51, and
   - a recovery device (20) according to any of clauses 52 to 58.
60. A battery pack comprising:
   - a plurality of batteries, and wherein each battery has an identical outer battery shape, and
   - a tracking device comprising at least a first radio module (11a) configured for transmitting and receiving RF messages and a battery (15) for powering the tracking device, and wherein the tracking device comprises a housing having an outer shape that is identical to said outer battery shape such that the tracking device cannot visually be distinguished from the batteries of the battery pack.

## Claims

1. A method for establishing a point-to-point wireless communication link between a tracking device (10) and a recovery device (20), wherein the tracking device (10) comprises a first radio module (11a), the method comprising the following steps performed by the tracking device (10):
a) performing a wake-up procedure comprising at least:
• obtaining a pre-agreed wake-up plan (WU-PL1, WU-PL2) used by the recovery device (20) for transmitting wake-up command messages (M1) to the tracking device (10), and wherein the wake-up plan comprises at least a plurality of subsequent transmit time slots (T0, T1, T2, T3) and a first sequence of channel frequencies (F1, F2, F3, F4) defining for each of the subsequent transmit time slots a corresponding channel frequency,
• detecting with said first radio module a presence of channel activities corresponding with said wake-up plan,
• if said presence of channel activities is detected, then using the first radio module and transmitting a wake-up response message (RM1) to the recovery device, and wherein the wake-up response message comprises at least a tracking device ID,
b) following the wake-up procedure, performing a tracking procedure to allow the recovery device to recover the tracking device, the tracking procedure comprising at least:
• obtaining a pre-agreed tracking plan (T-PL) comprising a sequence of time slots wherein one or more first transmit time slots (T1) alternate with one or more second transmit time slots (T2), and wherein said first and second transmit time slots are reserved for transmitting messages by respectively the tracking device and the recovery device, and wherein the pre-agreed tracking plan (T-PL) comprises a second sequence of channel frequencies defining for each of the first and second transmit time slots a corresponding channel frequency,
• transmitting first tracking messages (RM2) with the first radio module to the recovery device during said first transmit time slots at channel frequencies as defined by said second sequence of channel frequencies.

2. The method of claim 1 wherein the step of detecting a presence of channel activities corresponding with the wake-up plan comprises detecting one or more RF signals, preferably detecting subsequent RF signals, identifying a carrier frequency of each of the RF signals detected and comparing the carrier frequencies identified with frequencies of said first sequence of channel frequencies as obtained from the wake-up plan.

3. The method of claim 1 wherein the step of detecting a presence of channel activities corresponding with the wake-up plan comprises sub-steps of:
• randomly selecting a channel frequency from the first sequence of channel frequencies known from the wake-up plan,
• detecting if there exists a channel activity on the randomly selected channel frequency,
• if no channel activity is detected, then repeat the channel activity detection by selecting another channel frequency from the first sequence of channel frequencies known from the wake-up plan,
• said presence of channel activities corresponding with the wake-up plan is considered to be detected if:
A) an RF signal is detected at a first channel frequency of the first sequence of channel frequencies and a signal strength of the RF signal detected is above a pre-defined threshold level, or
B) at least a first and a second RF signal are detected at respectively a first and a second channel frequency of the first sequence of channel frequencies during two successive transmit time slots as defined by the wake-up plan.

4. The method of any of previous claims wherein the tracking procedure further comprises
• at regular time intervals, opening a listen time slot coinciding with one of the second transmit time slots defined by the tracking plan (T-PL),
• receiving a feedback message (M2) from the recovery device (20), and wherein said feedback message comprises signal strength data with respect to a previously transmitted first tracking message (RM2).
• adjusting a link budget for transmitting next first tracking messages (RM2) based on said signal strength data received.

5. The method of any of previous claims claim further comprising, before performing the wake-up procedure:
• detecting a recovery event, and wherein a recovery event is any of following events: i) receiving, with the first radio module or with a further radio module of the tracking device, a down-link signal from an application server (100) comprising instructions to perform a wake-up procedure, ii) not receiving a single message from the application server within a pre-defined time interval, or iii) detecting a tamper event,
• starting the wake-up procedure if the recovery event is detected.

6. The method of any of previous claims wherein the tracking device further comprising a second radio module (11b) and wherein said first and second radio module are configured for operating within respectively a first and second frequency band, and wherein the second frequency band is different from the first frequency band, preferably the first frequency band is in a range between 400 MHz and 1 GHz and the second frequency band is in a range between 2 GHz and 3 GHz, and wherein the tracking procedure further comprises:
• transmitting second tracking messages with the second radio module to the recovery device during said first transmit time slots.

7. A computer program product comprising processor-executable instructions for performing the method according to any of claims 1 to 6 when the computer program is run on a processor.

8. A tracking device (10) comprising:
• at least a first radio module (11a) configured for transmitting and receiving RF messages,
• a battery (15) for powering the tracking device,
• a computer-readable storage medium (13) storing a computer program comprising processor-executable instructions that when executed cause the tracking device (10) to perform the method according to any of claims 1 to 5,
• a processor (12) adapted to execute said computer program.

9. A tracking device (10) comprising:
• a first radio module (11a) and a second radio module (11b) configured for transmitting and receiving RF messages, and wherein the first and the second radio module are configured for operating within respectively a first and second frequency band, and wherein the second frequency band is different from the first frequency band, preferably the first and the second radio module are configured for simultaneously transmitting RF messages and/or for simultaneously receiving RF messages,
• a battery (15) for powering the tracking device,
• a computer-readable storage medium (13) storing a computer program comprising processor-executable instructions that when executed cause the tracking device (10) to perform the method according to claim 6,
• a processor (12) adapted to execute said computer program.

10. A method for establishing a point-to-point wireless communication link between a tracking device (10) and a recovery device (20), wherein the recovery device (20) comprises a first radio module for transmitting and receiving RF messages, the method comprising the following steps performed by the recovery device (20):
• obtaining a pre-agreed wake-up plan (WU-PL1, WU-PL2) comprising a plurality of subsequent transmit time slots (T0, T1, T2, T3) for transmitting wake-up command messages to the tracking device (10), and a first sequence of channel frequencies (F1, F2, F3, F4) defining for each of the subsequent transmit time slots a corresponding channel frequency,
• transmitting with the first radio module a wake-up command message (M1) during each of the transmit time slots according to the wake-up plan and wherein a carrier frequency of each wake-up command message corresponds to the channel frequency of the corresponding transmit time slot as determined by the wake-up plan,
• receiving with the first radio module a wake-up response message (RM1) from the tracking device, wherein the wake-up response message comprise a tracking device ID,
• obtaining a pre-agreed tracking plan (T-PL) as agreed for the tracking device having said tracking device ID, and wherein said tracking plan comprises a sequence of time slots wherein one or more first transmit time slots alternate with one or more second transmit time slots, and wherein said first and second transmit time slots are reserved for transmitting messages by respectively the tracking device and the recovery device, and wherein the tracking plan comprises a second sequence of channel frequencies defining for each of the first and second transmit time slots a corresponding channel frequency,
• opening listen time slots coinciding with the first transmit time slots as defined by the tracking plan,
• with the first radio module: receiving during said listen time slots first tracking messages (RM2) from the tracking device (10).

11. The method of claim 10 further comprising
• measuring a signal strength of one or more of the first tracking messages (RM2) received from the tracking device,
• during one of said second transmit time slots, transmitting a feedback message (M2) to the tracking device, and wherein said feedback message comprises the signal strength with respect to the one or more first tracking messages (RM2) received.

12. The method of any of claim 10 or claim 11 wherein the recovery device comprises a second radio module and wherein the method comprises:
• with the second radio module: receiving during said listen time slots second tracking messages from the tracking device (10).

13. A recovery device (20) comprising:
• a user interface comprising a display,
• a first radio module configured for transmitting and receiving RF messages,
• a power supply for powering the recovery device,
• a computer-readable storage medium storing a computer program comprising processor-executable instructions that when executed cause the recovery device to perform the method according to claim 10 or claim 11,
• a processor adapted to execute said computer program.

14. A recovery device (20) comprising:
• a user interface comprising a display,
• a first radio module and a second radio module configured for transmitting and receiving RF messages, and wherein the first and the second radio module are configured for operating within respectively a first and second frequency band, and wherein the second frequency band is different from the first frequency band, preferably the first frequency band is in a range between 400 MHz and 1 GHz and the second frequency band is in a range between 2 GHz and 3 GHz, preferably the first and the second radio module are configured for simultaneously transmitting RF messages and/or simultaneously receiving RF messages,
• a power supply for powering the recovery device,
• a computer-readable storage medium storing a computer program comprising processor-executable instructions that when executed cause the recovery device to perform the method according to claim 12,
• a processor adapted to execute said computer program.

15. The recovery device of any of claims 13 or 14 further comprising a geographic position determining device configured for:
i) determining a location of the recovery device,
ii) displaying a geographic map on the display and visualizing the location of the recovery device on the geographic map with a position identifier,
iii) adjusting a color and/or a size of the position identifier in accordance with a measured signal strength of the tracking messages received from the tracking device.
